# EUROPEAN PATENT SPECIFICATION

(11) **EP 1 729 559 B1**
(45) Date of publication and mention of the grant of the patent: **18.07.2007**
(21) Application number: 05718062.2
(22) Date of filing: 18.03.2005
(51) Int. Cl.: A01G 3/053

(54) **HEDGE CUTTER**
HECKENSCHNEIDER
TAILLE-HAIE

(30) Priority: 19.03.2004 GB 0406292
(43) Date of publication of application: 13.12.2006
(73) Proprietor: Marley, Keith, Orpington, Kent BR6 9AP (GB)
(72) Inventor: Marley, Keith, Orpington, Kent BR6 9AP (GB)
(74) Representative: Shindler, Nigel
(86) International application number: PCT/GB2005/001019
(87) International publication number: WO 2005/089533

(56) References cited:
- US-A- 4 654 971
- US-A- 4 760 646
- US-A- 4 976 031
- US-A- 5 689 887

## Description

The invention relates to an extendable hedge cutter.

The reach of known hedge cutters is limited to the length of their cutting heads. This can make the maintenance of wide or tall hedges, or shrubs difficult and dangerous for a user, for example when a user has to overstretch themselves or has to use a ladder to reach otherwise inaccessible parts. This problem may be solved by providing hedge cutters which have a reach that can be extended to an appropriate length when required. Hedge cutters having a reach which can be extended are known. However the known hedge cutters suffer from a number of problems.

One known type of extendable hedge cutter has an extendable handle. The handle is extendable from the main body of the hedge cutter and the user may use the extended handle to obtain a greater reach. These cutters however suffer from the disadvantage that the whole of the main body, including the engine, and the cutting head, are moved away from the user unbalancing the machine and making it difficult and heavy for the user to manipulate. Such handles can be provided as cradles for supporting the hedge cutter body or as extending poles with a holding point for the user at one end and the engine and cutting head located at the opposite end.

It is preferable to provide an extendable hedge cutter in which the drive means of the hedge cutter is kept close to the body of the user allowing for easier balancing of the tool and for easier manipulation.

Extendable hedge cutters in which the main body, including the drive means, is held by the user and the cutting part is extendable away from the main body are also known.

For example the hedge cutter disclosed in US4654971, is provided with an engine; a cutting head; and a plurality of telescoping concentrically aligned drive shaft sections connecting the engine and cutting head and allowing the cutting head to be moved away from the engine. This cutter has disadvantages however, because a gear box must be provided in combination with the cutting head, this increases the weight at the head end of the cutter unbalancing the cutter and increases the difficulty and costs of manufacture and maintenance. It is also disadvantageous because rotary drive shafts are susceptible to twisting and bending in the event of a jam occurring in the cutting head.

As a further example the extendable chain saw disclosed in US4760646 is provided with an engine in the main body held by the user; a cutting head; a telescoping boom extending between the engine and the cutting head; a power transmission means; and a gearing arrangement located in close association with the cutting head.

As a further example, US5689887 discloses a hedge cutter comprising a main body, a cutting head including first and second blade members driven to reciprocate longitudinally relative to each other, and drive means adapted to reciprocate the driven blade members.

### Statement of Invention

According to the present invention there is provided a hedge cutter comprising;
a main body;
a cutting head including first and second elongate bladed members, in which at least one of the bladed members is adapted to be driven to reciprocate longitudinally relative to the other bladed member to effect a cutting action; said cutting head being adapted to be fixable on the main body at at least two alternative spaced positions on the main body;
drive means arranged to reciprocate the driven bladed member or members; and
means for setting a direct or indirect connection between the driven bladed member or members and the drive means when the cutting head is in any one of the at least two alternative spaced positions.

### Brief Description of the Drawings

Embodiments of a hedge cutter in accordance with the invention will now be described by way of example only and with reference to the accompanying figures of which:
Figures 1 (a) and (b) show perspective views of an extendable hedge cutter in the non-extended state and the extended state respectively;
Figure 1(c) shows a section along the line A-B of figure 1 (b);
Figures 2 (a) and (b) show sections of a cutting head and a drive shaft of a hedge cutter in the non-extended state and extended state respectively;
Figure 3 shows an exploded view of a cutting head in combination with a drive member;
Figure 4 shows an exploded view of a drive member and part of a cutting head;
Figure 5 shows a plan view of a cutting head and a portion of a drive member;
Figure 6 shows a plan view of a connecting portion of a cutting head and drive member;
Figure 7 shows a side view of a connecting portion of a cutting head and drive member;
Figure 8 shows a bottom view of a connecting portion of a cutting head and drive member ;

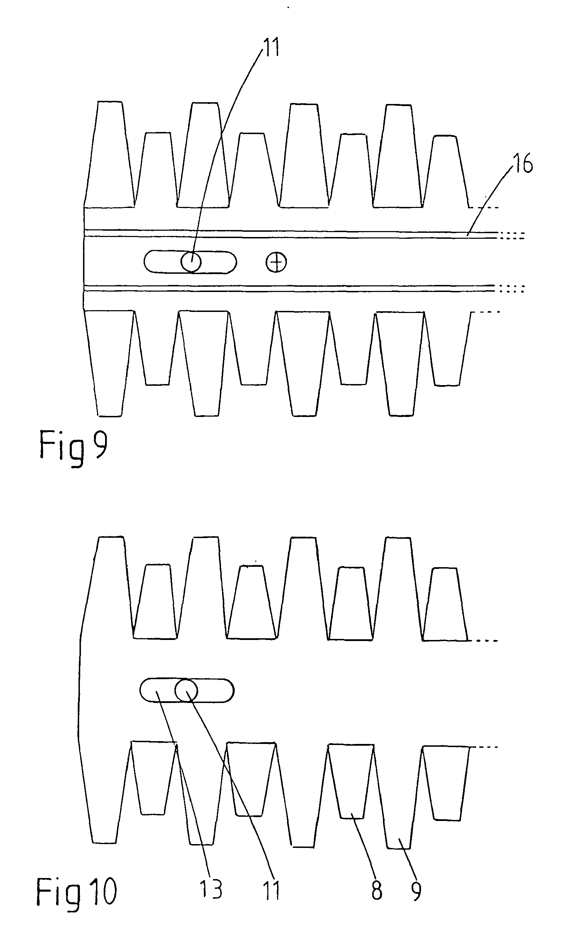

Figure 9 shows a plan view of an end of a cutting head.
Figure 10 shows an underside view of an end of a cutting head.
Figure 11 shows an exploded view of a drive member;
Figures 12 a and b show an exploded view of a locking mechanism for use with a hedge cutter in accordance with the invention.
Figures 13 a and b show a sectional view of a locking mechanism for use with a hedge cutter in accordance with the invention.
Figure 14 shows a blade support bar and a sheath
Figure 15 shows an exploded view of a cutting head in combination with a drive member;
Figure 16 shows an exploded view of a cutting head in combination with a drive member;

### Detailed Description

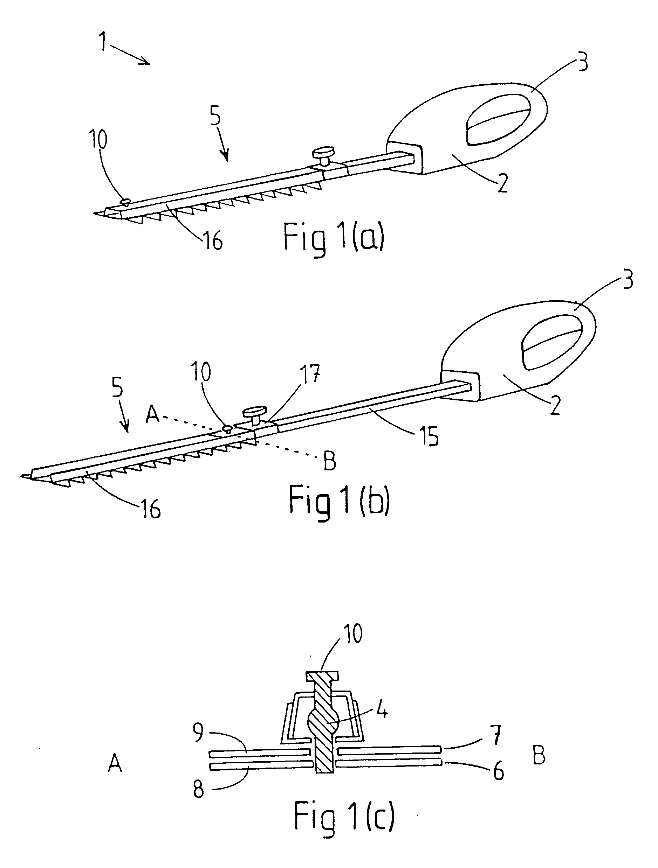

An extendable hedge cutter 1, as shown in figures 1 (a) and (b) has a main body 2; a drive means comprising an engine or motor and a reciprocating drive member 4 (shown in figure 1 (c)); and a cutting head 5. The main body 2, houses the drive means and incorporates means such as a handle 3, by which a user can hold the main body 2.

The cutting head 5 is usable in the retracted position shown in figure 1 (a) and in the extended position shown in figure 1 (b), and can be moved between the two positions by a user. The hedge cutter can be used in the retracted position for close quarters work and in the extended position when a greater reach is required. This is advantageous because a single cutter can be used for both types of work.

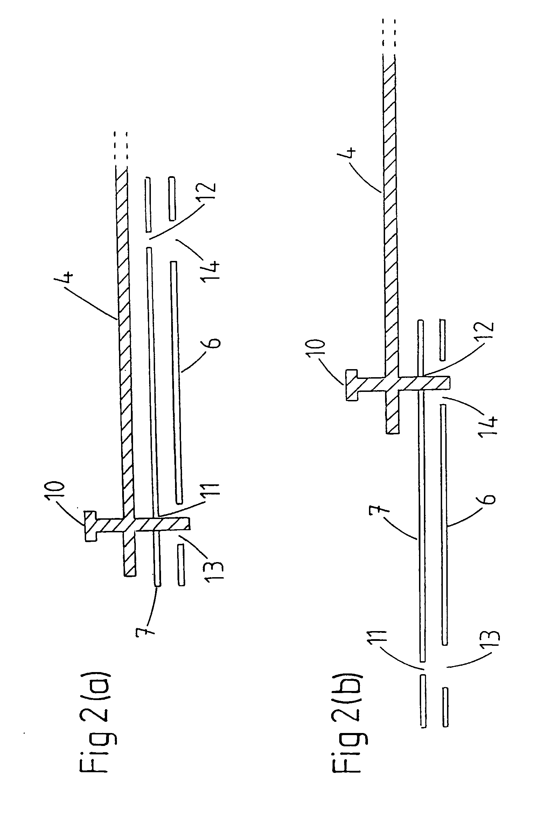

As illustrated in figures 1 (a) and (b), and 2 (a) and (b), the cutting head 5 is comprised of an elongate fixed bladed member 6 provided with blades 8, and an elongate reciprocating bladed member 7 provided with blades 9. The reciprocating bladed member 7 is moved longitudinally back and forth relative to the fixed bladed member 6, effecting a cutting action between the blades 8, 9.

In this particular embodiment the drive member 4, is connected to the reciprocating bladed member 7, by a pin 10. The pin 10 is snugly received into one of two longitudinally spaced holes in the reciprocating bladed member 7. A first hole 11 is located at the end of the reciprocating bladed member 7 which is furthest from the main body of the cutter and a second hole 12 is located at the end of the reciprocating bladed member 7 which is closest to the main body of the cutter. When the pin 10 is located in the first hole 11, the drive member 4 runs the length of the cutting head and the hedge cutter is in its retracted working position. When the pin 10 is located in the second hole 12, the cutting head is connected to the outer end of the drive member 4 and the hedge cutter is in its extended working position as illustrated in figure 2 (b). The reciprocating motion of the drive member 4 is transmitted via the pin 10, to the reciprocating bladed member 7. It will be clear to those skilled in the art that means to connect the drive member 4 with the reciprocating bladed member 7, other than the pin 10, could be used and that both direct and indirect connections between the drive member 4, and the reciprocating bladed member 7, could also be used.

As illustrated in figures 2(a) and (b) the fixed bladed member 6 is provided with first and second holes 13 and 14, aligned with the first and second holes 11 and 12 of the reciprocating bladed member 7, respectively. The holes 13 and 14 are adapted to receive the pin 10 and extend in the longitudinal direction of the cutting head 5, thus allowing the pin 10 to reciprocate the reciprocating bladed member 7, and effect the cutting action of the cutting head 5.

The pin 10 can be retracted from the holes 11, 12, 13, 14, allowing a user to relocate the pin at the available alternative location. The pin 10 is preferably biased toward the bladed members 6,7, for instance by a spring.

In alternative embodiments (not illustrated) more than two holes for receiving the pin 10 may be provided along the length of the reciprocating bladed member 7, providing more than two working positions for the hedge cutter.

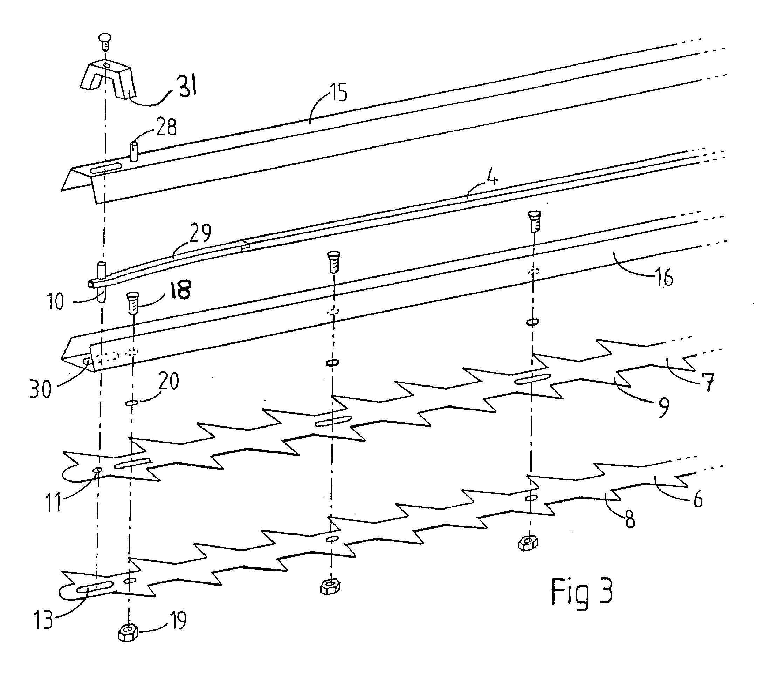

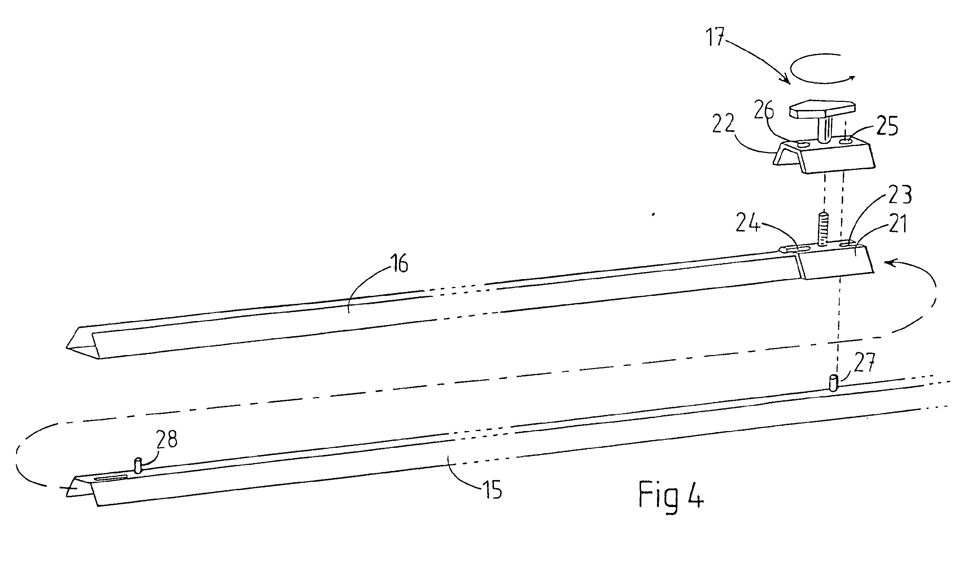

As illustrated in figures 3 and 4, the hedge cutter 1 is provided with a sheath 15 surrounding the drive member 4, on three sides. It will be clear that the sheath 15 can be of a variety of cross-sections including circular, oval, and polygonal. It will also be clear that the sheath can surround the drive member 4 on fewer than three sides or can surround the drive member 4 on all sides.

As illustrated in figures 3 and 4 the cutting head 5 is provided with a blade support bar 16 formed into a channel which receives the drive member 4.

The blade support bar 16 is attached to the bladed members 6, 7, by the nut 18 and bolt 19 arrangements illustrated in figure 3. To allow a free reciprocating movement between the bladed members 6, 7, spacers 20 are located between the bladed members and the blade support bar 16.

When the hedge cutter is in the retracted working position the drive member 4 and the sheath 15 run further into the blade support bar 16 than in the extended working position.

As illustrated in figures 1 (a) and (b) and 3 and 4 the cross-sections of the sheath 15 and the blade support bar 16 are preferably adapted to co-operate with one another so that when the sheath 15 and the blade support bar 16 are fitted together, longitudinal movement between the two is possible but lateral movement is restricted. In the embodiment illustrated in figures 1 (a), (b), 3 and 4 the cross sections of the sheath 15 and the blade support bar are substantially trapezoidal. In both of these embodiments the sheath 15 nests inside the blade support bar 16. It will be clear that in alternative embodiments the blade support bar 16 may be adapted to nest within the sheath 15.

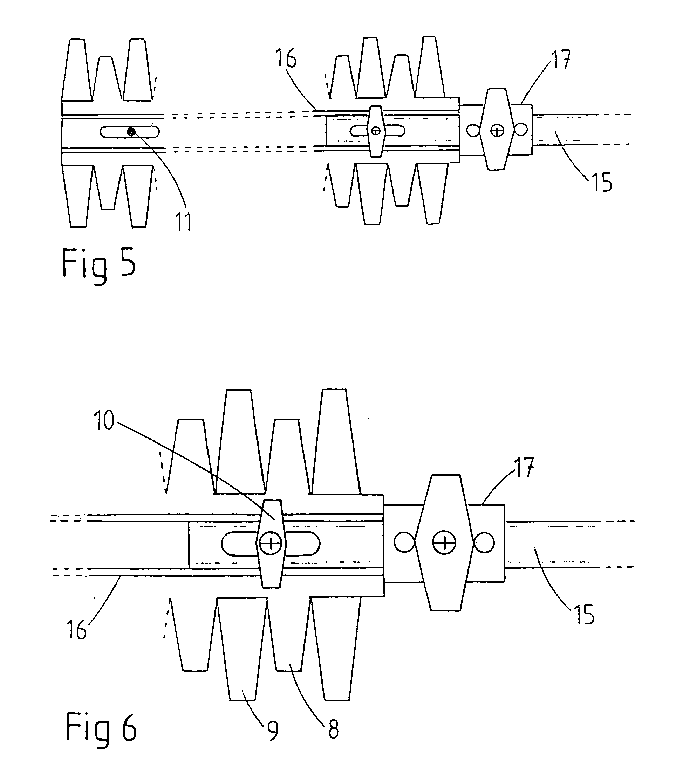

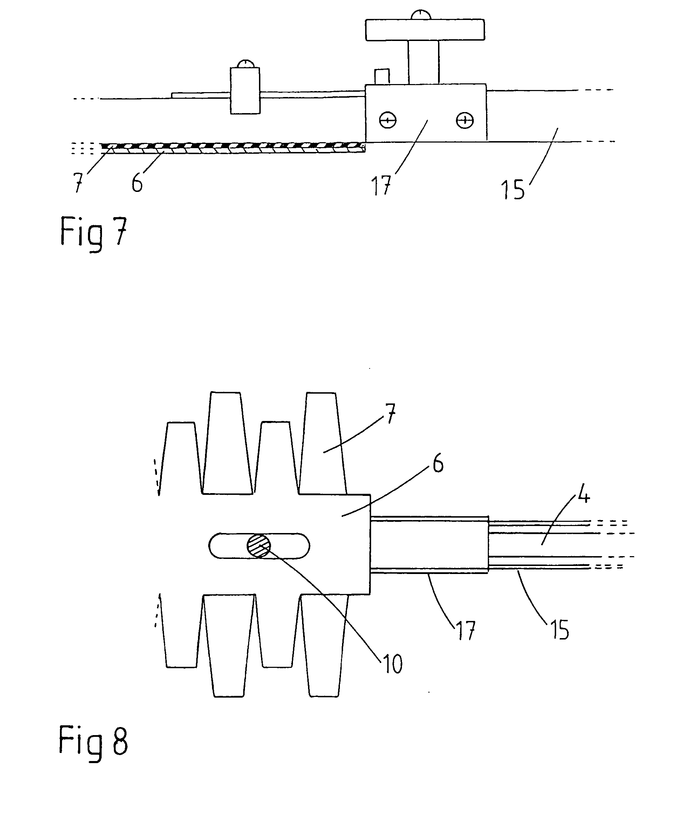

As illustrated in figures 1 (a) and (b) and 4 to 7, the hedge cutter is also provided with means 17 to semi-permanently lock the sheath 15 to the blade support bar 16. In the embodiment illustrated in figure 4 this means takes the form of a clamping system 17. The clamping system is comprised of a first member 21 shaped to closely fit over a portion of the length of the blade support bar 16, and a second member 22 shaped to engage with the first member 21. A screw mechanism is provided for releasably clamping the first and second members 21, 22, together. The first member 21 is attached to the blade support bar 16 and is provided with first and second channels 23 and 24 for engaging, respectively, first and second pegs 27, 28, provided on the sheath 15. The second member 22 is provided with first and second holes 25, 26 for engaging with the first and second pegs 27, 28 respectively. In this manner when the cutter is in its retracted configuration the first channel 23, and the first hole 25, engage with the first peg 27 and the first and second members 21 and 22 can be screwed together to lock the sheath 15 and the blade support bar 16 together. To change from the retracted configuration to the extended configuration the clamp mechanism 17 is unscrewed and the blade support bar is then slid along the sheath 15, so the second pin 28 engages with the second channel 24 and the second hole 26. The clamp mechanism is then screwed down to lock the blade support bar 16 to the sheath 15.

In the embodiment illustrated in figure 3 an elongate hole 30 is provided in the end of the blade support member 16 to allow the pin 10 to pass through and engage holes 11 and 13 on the bladed members 6, 7. Similarly a second elongate hole (not illustrated) is provided on the blade support member allowing the pin 10 to engage with the holes 12 and 14 of the bladed members.

As illustrated in figure 3 the retractable pin 10 is provided on the end of a biasing spring 29, attached to the outer end of the drive member 4. The biasing spring 29 can be made from a piece of hardened steel angled so as to bias the pin 10 toward the bladed members 6, 7. A portion of the pin 10 extends through an elongate hole in the sheath 15 and is attached to a bar 31, shaped to fit closely with the sheath 15. To disengage the pin from the blade support bar 16 and bladed members 6, 7, the bar 31 is pulled upwardly and then rotated so that it rests on top of the sheath 15 and the pin can not re-engage with the blade support bar 16 or the bladed members 6, 7. To re-engage the pin 10, the bar 31 is rotated until it fits closely over the sheath allowing the pin to drop back into engagement with the blade support bar 16 and bladed members 6, 7.

To change the configuration of the cutter, the clamp mechanism is unscrewed and the pin 10 is pulled out of engagement with the blade support bar 16 and the bladed members 6, 7. The cutting head, comprising the blade support bar 16 and bladed members 6, 7, is then slid along the sheath 15, until aligned at the appropriate alternative location on the sheath 15, the clamp being screwed down to lock the sheath and blade support bar together and the pin 10 being released to engage the blade support bar 16 and the bladed members 6, 7. The pin 10 may not immediately be aligned correctly with the appropriate holes in the blade support bar 16 and the bladed members 6, 7, however because of the biasing of the spring 29, the pin 10 will re-engage when the drive shaft is reciprocated.

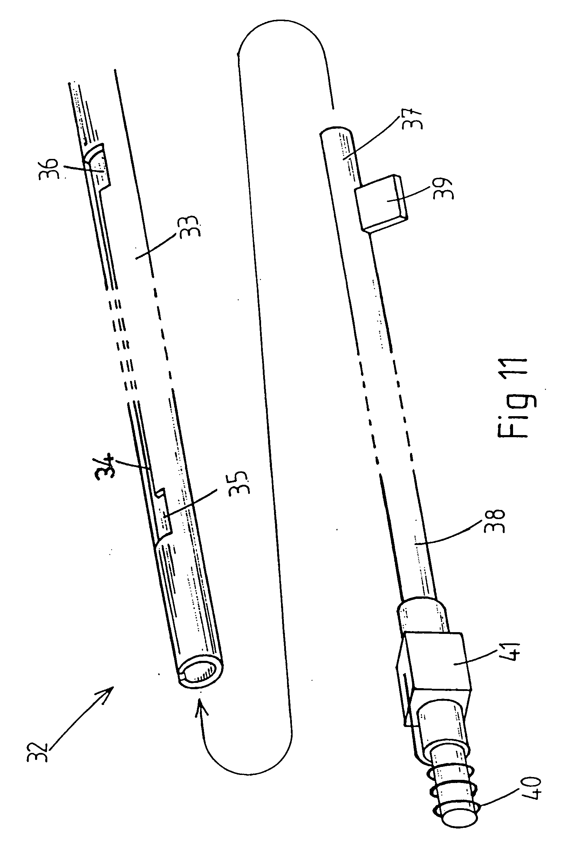

In another embodiment an alternative drive member 32 (illustrated in figure 11) is provided. The alternative drive member comprises a cylinder 33 and a connecting member 37.

The cylinder 33 is provided with a axially extending slot 34 having along its length at least two circumferentially extending cutouts 35, 36 and is connected to and reciprocated by the engine or motor.

The connecting member 37 comprises a rod 38 adapted to be slidably received in the cylinder 33; and a projection 39 radially extending from the rod 38 and adapted to be engage with cutouts 35, 36. The connecting member 37 is connected to the reciprocated bladed member 7. The connection is preferably permanent.

The projection 39 is radially biased toward the cutouts 35, 36. In the embodiment of figure 11 a helical spring 40 is joined to one end of the rod 38 and to a block 41. Rod 38 is rotatably mounted in block 41. Block 41 is fixed in the blade support bar 16 so that it cannot rotate relative to the blade support bar 16.

This arrangement allows the effective length of the drive member 32 shown in figure 11 to be adjusted.

In use the projection 39 engages in one of the cutouts 35, 36 under pressure of the spring 40. When the cylinder 33 is reciprocated this motion is transmitted to the rod 38 via projection 39.

To alter the length of the drive member 32, the projection 39 is retracted from the cutout 35, 36 into the slot 34 and is then shifted axially until it engages the alternative cutout 35, 36.

More cutouts may be provided along the length of the cylinder 33, so as to provide three or more locations in which the projection 39 can be received, increasing the number of different lengths the drive member 32 can attain.

In the present embodiment the connecting member 37 is in permanent connection with the cutting head 5 during the process of extension and retraction.

The drive member 4 illustrated in figure 3 may be substituted by the drive member 32 illustrated in figure 11, there being provided at least a semi-permanent connection between the connecting member 37 and the bladed member 7. For instance a screw connection may connect the bladed member 7 through hole 11 to block 41.

There is also provided means for disengaging the projection 39 from cutouts 35, 36 either by action on the projection 39 or by rotation of rod 38.

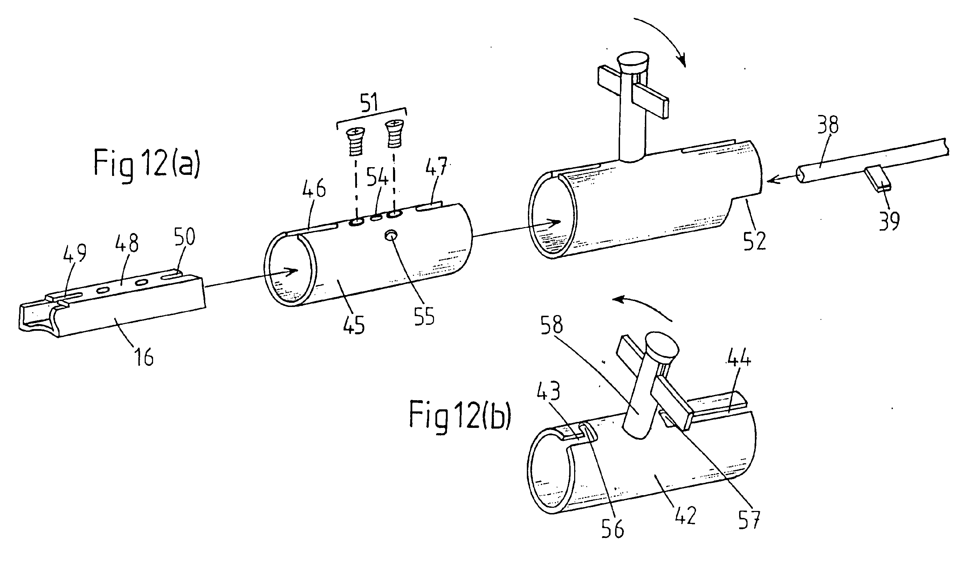

One arrangement for disengaging the projection 39 is illustrated in figures 12 a, b and 13 a, b. This comprises an outer barrel 42 having axially extending slits 43, 44 at opposing ends of the barrel 42; an inner barrel 45 having axially extending slits 46, 47; and a locking mechanism 58, for releasably locking the inner and outer barrels together.

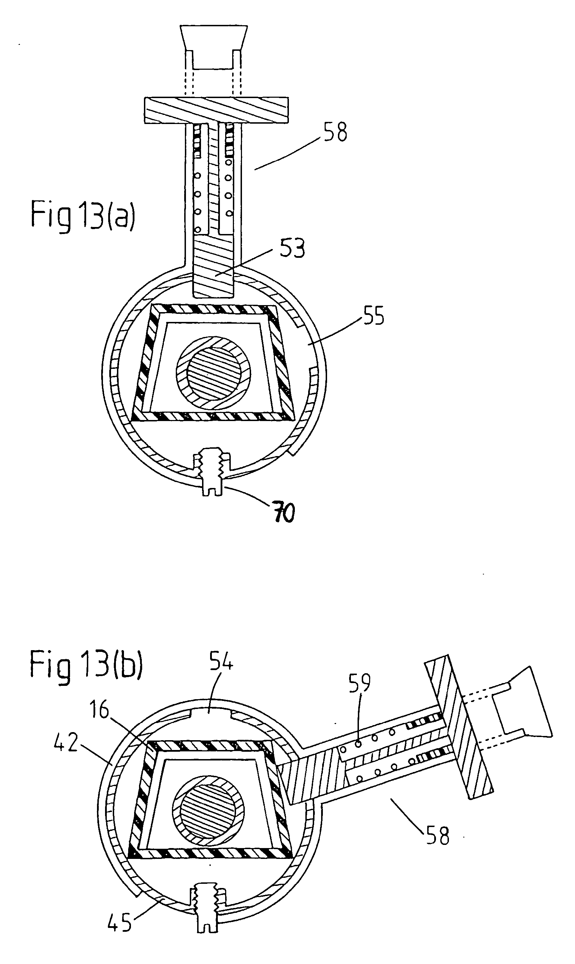

The inner barrel 45 is mounted on the blade support bar 16. In the illustrated example a plate 48 is provided on the support bar 16. The plate 48 has two longitudinally extending slits 49, 50 at opposing ends, arranged to sit beneath slits 46, 47 of the inner barrel 45. The inner barrel 45 is attached to the plate 48 by screw means 51.The outer barrel 42 is rotatably mounted on the inner barrel 45 as illustrated in figure 13 a, b. The outer barrel 45 is provided with a cutout 52 at one end into which the projection 39 on the rod 38 is received. A blocking piece 70 is provided on the inner barrel 42 and abuts the side walls of the cuttout 52, restricting the rotation of the outer barrel 42.

The locking mechanism 58 acts to releasably lock the outer barrel 42 into fixed relationship with the inner barrel 45. A latch 53 is located in the locking mechanism 58 and is biased toward the inner barrel 45 by spring means 59. The latch engages one of two holes 54, 55 on the inner barrel 45 locking the inner and outer barrels together. The outer barrel can be rotated by pulling the latch out of engagement with the hole 54, 55 and rotating the outer barrel 42 until the latch 53 is pushed into the alternative hole 54, 55 by spring means 59.

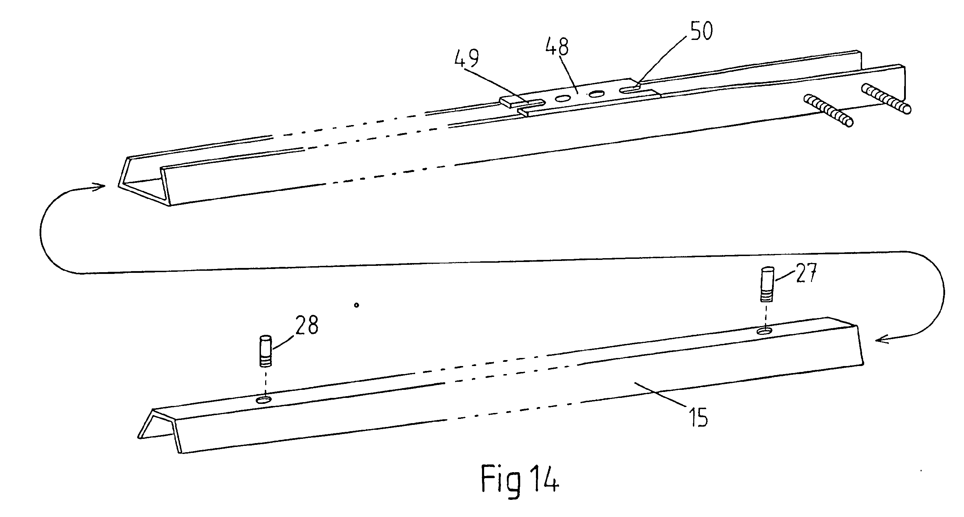

The slits 43, 44 of the outer barrel 42, the slits 46, 47 of the inner barrel 45 and the slits 49, 50 of the plate 48 are adapted to cooperate with pins 27, 28 illustrated in figure 14. The sheath 15 fits within the blade support bar 16 and is slidable between two positions where slits 43, 46 and 49 engage pin 28 and where slits 44, 47 and 50 engage pin 27. The slits abut their respective pins 27, 28 at locations where the projection 39 is approximately in line with one of the cutouts 35, 36 on the cylinder 33. The projection is located in close enough relation to one of the cutouts 35, 36 so that on reciprocation of the cylinder by the motor or engine, the cutout and projection will come into line and the projection 39 will engage with the cutout.

The axially extending slits 43, 44 of the outer barrel 42 are provided at their axially inner ends, with recesses 56, 57. When the barrel is rotated so that the latch 53 engages with hole 55 on the inner barrel, either recess 56 is moved around pin 28 or recess 57 is moved around pin 27. The walls of the recess abut the pin and prevent axial movement of the outer barrel 42 and consequently axial movement of the inner barrel 45 and blade support bar 16. When the barrel is rotated so that the latch 53 engages with hole 54, slits 43 and 44 with slits 46, 47, 49 and 50 line up. This releases the mechanism from the pin 27 or 28 and allows axial movement.

When the outer barrel 42 is rotated to the position where the latch 53 engages hole 54, a wall of the cutout 52 on the outer barrel 42 acts on the projection 39 is pushing it out of engagement with the cutout 35, 36 on cylinder 33 in which it is resting, and into the axially extending slot 34. This disengages the cutting head 5 from the cylinder 33 allowing it to be moved along the sheath 15 changing the distance between the cutting head 5 and the main body 2.

Once the cutting head 5 has been moved to the appropriate location, the locking mechanism is rotated in the opposite direction allowing the projection 39 on the rod 38 to re-engage the cylinder at one of the cutouts 35, 36. As previously mentioned the projection 39 is biased toward the cutouts 35, 36.

In a preferred embodiment both bladed members 6, 7, may be reciprocating. The bladed members are arranged to reciprocate in substantially opposing motion. Such an arrangement results in a reduction in vibration of the hedge cutter making it easier to use and reducing stress on the components of the hedge cutter. Dual reciprocation is also advantageous because the amplitude of movement of the bladed members is half that of when only one bladed member is reciprocated.

In one embodiment (not illustrated) the hedge cutter is provided with two reciprocating drive members, each drive member reciprocating one of the bladed members. In such an embodiment it is preferable to time the reciprocation of the bladed members so that they have opposing motions. In such an embodiment two drive members are provided and run substantially parallel to one another. One of the drive members engages with one of the bladed members and the other drive member engages with the other bladed member. Preferably an enlarged blade support bar 16 is provided and both of the drive members run therein. Two cams are provided and driven by the motor or engine. Each cam is connected to one of the bladed members and acts to reciprocate the bladed member. The cams are arranged to reciprocate the bladed members in opposing motion.

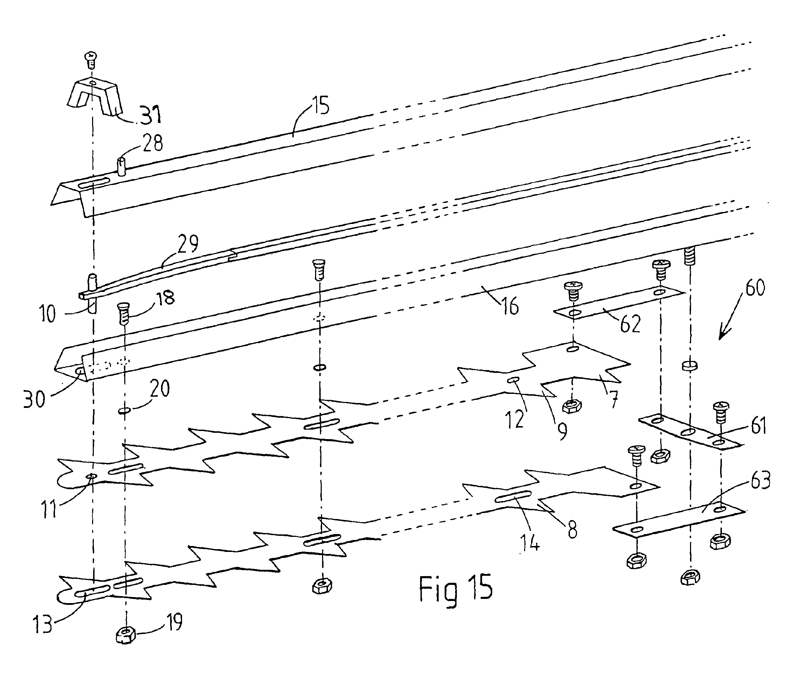

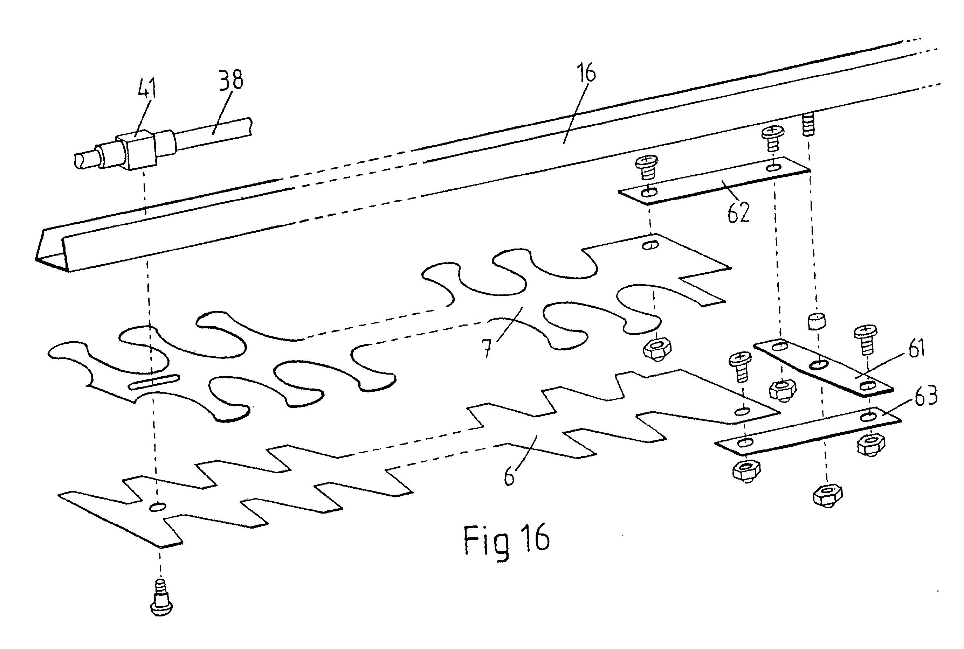

An alternative embodiment providing dual reciprocating bladed members 6, 7 is illustrated in figures 15 and 16.

Figure 15 shows the dual reciprocating arrangement in combination with the embodiment having a fixed length drive member 4 and figure 16 shows the dual reciprocating mechanism in combination with the extendable drive member 32.

In the embodiments shown in figures 15 and 16 both bladed members 6, 7 are adapted to be longitudinally reciprocated in relation to the blade support bar 16.

In figure 15 the drive member 4 is connected to the bladed member 7 via the engagement of pin 10 in either hole 11 or 12. In this manner the drive member 4 reciprocates the bladed member 7. The reciprocating motion of the bladed member 7 is translated to the bladed member 6 via the parallel linkage 60.

The parallel linkage comprises a lever 61 adapted to pivot in the plane of movement of the bladed members; and two linkages 62, 63, each pivotally connecting one of the bladed members 6, 7 to one end of lever 61. Each of the linkages is pivotably connected at one end to the lever 61 and pivotally connected at the other end to one of the bladed members 6, 7.

In figure 15, as the bladed member 7 is moved backward by drive member 4, the first linkage 62 is moved backward, this in turn operates the lever 61 which pushes the second linkage 63 forward which pushes the bladed member 6 forward. The opposite movement takes place as the bladed member 7 is moved forward by drive means 4.

A similar action takes place for the embodiment of figure 16, however the drive means 32 drives the bladed member 6.

## Claims

1. A hedge cutter (1) comprising ;
a main body (2);
a cutting head (5) including first and second elongate bladed member (6, 7), in which at least one of the bladed members is adapted to be driven to reciprocate longitudinally relative to the other bladed member to effect a cutting action; said cutting head being adapted to be fixable on the main body at at least two alternative spaced positions on the main body;
drive means arranged to reciprocate the driven bladed member or members; and
means for setting a direct or indirect connection between the driven bladed member or members and the drive means when the cutting head is in any one of the at least two alternative spaced positions.

2. A hedge cutter according to claim 1 wherein each driven bladed member is adapted to co-operate with a drive member of the drive means.

3. A hedge cutter according to claim 1 or 2 wherein the main body comprises an elongate extension and the cutting head is adapted to be interchangeably fixable on the elongate extension at at least two alternative longitudinally spaced positions on the elongate extension.

4. A hedge cutter according to claim 3 wherein the cutting head is provided with an elongate blade support bar formed into a channel adapted to receive the drive member.

5. A hedge cutter according to claim 3, when appended to claim 2, or claim 4, wherein the elongate extension is an elongate sheath member which co-operates with the blade support bar and extends along the length of the drive member.

6. A hedge cutter according to claim 5 when appended to claim 4, wherein the sheath and the blade support bar are adapted to inter-engage with one another, in a manner that restricts relative movement between them to the longitudinal direction.

7. A hedge cutter according to claim 6 wherein the sheath and the blade support bar inter-lock so as to lock together in the lateral direction.

8. A hedge cutter according to any one of claims 2 to 7, wherein there is provided at least one retractable pin and a plurality of co-operating recesses or holes, whereby the at least one pin and the plurality of holes or recesses are adapted to directly or indirectly connect the driven bladed member or members with a drive member.

9. A hedge cutter according to any one of claims 5 to 8 wherein there is provided means adapted to releasably lock together the sheath and the cutting head.

10. A hedge cutter according to claim 9 wherein, the means adapted to releasably lock together the sheath and the cutting head comprises a first member fixed to the blade support bar or the sheath and a second member adapted to releasably engage the first member.

11. A hedge cutter according to any one of the preceeding claims wherein both bladed members are adapted to be driven to reciprocate longitudinally and both bladed members are provided with drive means arranged to reciprocate them.

12. A hedge cutter according to claim 11 wherein the first and second bladed members are arranged to reciprocate with substantially opposed motion.

13. A hedge cutter according to claim 11 or 12 wherein one of the bladed members is adapted to drive the reciprocating action of the other bladed member.

14. A hedge cutter according to any one of claims 11 to 13 wherein the first and second bladed members are connected by a parallel linkage.

15. A hedge cutter according to any one of the preceding claims wherein each drive member has a fixed length and is releasably engagable with at least one driven bladed member.

16. A hedge cutter according to any one of claims 1 to 14 wherein each drive member is adapted to have a variable length.

17. A hedge cutter according to any one of claims 11 to 12 comprising two drive members, each adapted to reciprocate one of the bladed members.

## Patentansprüche

1. Ein Heckenschneider (1) umfassend;
einen Hauptkörper (2);
einen Schneidkopf (5) beinhaltend erste und zweite längserstreckte klingenbewährte Glieder (6,7), wobei wenigstens eines der klingenbewährte Glieder geeignet ist angetrieben zu werden, um eine Hin- und Herbewegung in der Längserstreckung relativ zu dem anderen klingenbewährten Glied durchzuführen, um eine Schneidwirkung zu erzeugen;
der Schneidkopf geeignet ist an dem Hauptkörper befestigt zu werden, in wenigstens zwei unterschiedlich von dem Hauptkörper beabstandeten Stellungen;
Antriebseinrichtungen geeignet für die Hin- und Herbewegung des angetriebenen klingenbewährten Gliedes oder Glieder; und
Einrichtungen zum Einstellen einer direkten oder indirekten Verbindung zwischen dem angetriebenen klingenbewährten Glied oder Glieder und der Antriebseinrichtung, wenn der Schneidkopf sich in einer der wenigstens zwei alternativen, beabstandeten Stellungen befindet.

2. Ein Heckenschneider nach Anspruch 1, worin jedes angetriebene klingenbewährte Glied geeignet ist mit einem Antriebsglied der Antriebseinrichtung zusammenzuwirken

3. Ein Heckenschneider nach Anspruch 1 oder 2, worin der Hauptkörper einen Verlängerungsansatz umfaßt und der Schneidkopf geeignet ist in auswechselbarer Weise an dem Verlängerungsansatz befestigt zu werden, an wenigstens zwei verschieden längsbeabstandeten Positionen auf dem Verlängerungsansatz.

4. Ein Heckenschneider nach Anspruch 3, worin der Schneidkopf mit einer längserstreckten Schneidehalteschiene versehen ist, gebildet in einem Kanal und geeignet das Antriebsglied aufzunehmen.

5. Ein Heckenschneider nach Anspruch 3, wenn abhängig nach Anspruch 2 oder Anspruch 4, worin der Verlängerungsansatz ein längserstrecktes Hüllglied ist, welches zusammenwirkt mit der Schneidehalteschiene und sich erstreckt über die Länge des Antriebsgliedes.

6. Ein Heckenschneider nach Anspruch 5, wenn abhängig nach Anspruch 4, worin die Hüllen- und die Schneidehalteschiene geeignet sind jeweils ineinandereinzugreifen, in einer Weise welche die relative Bewegung zwischen ihnen in der längserstreckten Richtung beschränkt.

7. Ein Heckenschneider nach Anspruch 6, worin die Hüllen- und die Schneidehalteschiene verriegelt sind, so dass sie in der seitlichen Richtung gegeneinander verriegeln.

8. Ein Heckenschneider nach einem der Ansprüche 2 bis 7, worin dieser versehen ist mit wenigstens einem einschiebbaren Dorn und einer Vielzahl von zusammenwirkenden Ausnehmungen oder Löchern, wobei der wenigstens eine Dorn und die Vielzahl von Löchern oder Ausnehmungen geeignet sind direkt oder indirekt das angetriebene messerbewährte Glied oder Glieder mit dem Antriebsglied zu verbinden.

9. Ein Heckenschneider nach einem der Ansprüche 5 bis 8, worin dieser mit Einrichtungen versehen ist die geeignet sind die Hülle und den Schneidkopf lösbar miteinander zu verbinden.

10. Ein Heckenschneider nach Anspruch 9, worin die Einrichtung, geeignet zur lösbaren Verbindung der Hülle und des Scheidkopfes, ein erstes Glied befestigt auf der Schneidehalteschiene oder der Hülle und ein zweites Glied geeignet zum lösbaren Eingriff des ersten Gliedes umfaßt.

11. Ein Heckenschneider nach einem der vorhergehenden Ansprüche, worin beide klingenbewährte Glieder geeignet sind in Längsrichtung hin und her bewegt zu werden und beide klingenbewährte Glieder mit Antriebseinrichtungen versehen sind, eingerichtet um diese hin und herzu bewegen.

12. Ein Heckenschneider nach Anspruch 11, worin das erste und zweite klingenbewährte Glied so angeordnet sind, um die Hin- und Herbewegung mit im wesentlichen gegenläufiger Bewegung durchzuführen.

13. Ein Heckenschneider nach Anspruch 11 oder 12, worin eines der klingerbewährten Glieder geeignet ist, die Hin- und Herbewegung des anderen klingenbewährten Gliedes anzutreiben.

14. Ein Heckenschneider nach einem der Ansprüche 11 bis 13 worin das erste und zweite klingenbewährte Glied durch eine parallele Verbindung miteinander verbunden sind.

15. Ein Heckenschneider nach einem der vorhergehenden Ansprüche, worin jedes Antriebsglied eine feste Länge aufweist und lösbar mit wenigstens einem der angetriebenen klingenbewährten Glieder verbindbar ist.

16. Ein Heckenschneider nach einem der Ansprüche 1 bis 14 worin jedes Antriebsglied geeignet ist eine variable Länge aufzuweisen.

17. Ein Heckenschneider nach einem der Ansprüche 11 bis 12, umfassend zwei Antriebsglieder, jedes geeignet zur Hin- und Herbewegung eines der klingenbewährten Glieder.

## Revendications

1. Taille-haie (1) comportant;
un corps (2) principal ;
une tête (5) de taille comportant des premier et deuxième éléments (6, 7) oblongs à lame, dans lequel au moins l'un des éléments à lame est conçu pour être entraîné pour effectuer un mouvement de va-et-vient longitudinalement par rapport à l'autre élément à lame pour réaliser une action de taille ; la tête de taille étant conçue pour pouvoir être fixée sur le corps principal à au moins deux positions alternatives à distance l'une de l'autre sur le corps principal ;
des moyens d'entraînement agencés pour donner à l'élément ou aux éléments à lame entrainé(s) un mouvement de va-et-vient; et
des moyens pour régler une connexion directe ou indirecte entre l'élément ou les éléments entraîné (s) à lame et les moyens d'entraînement lorsque la tête de taille se trouve dans l'une quelconque des deux positions alternatives à distance l'une de l'autre.

2. Taille-haie suivant la revendication 1, dans lequel chaque élément à lame entraîné est conçu pour coopérer avec un élément d'entraînement des moyens d'entraînement.

3. Taille-haie suivant la revendication 1 ou 2, dans lequel le corps principal comporte une extension oblongue et la tête de taille est conçue pour pouvoir être fixée de manière interchangeable sur l'extension oblongue en au moins deux positions alternatives à distance l'une de l'autre longitudinalement sur l'extension oblongue.

4. Taille-haie suivant la revendication 3, dans lequel la tête de taille est munie d'une barre de support de lame oblongue formée dans un canal conçu pour recevoir l'élément d'entraînement.

5. Taille-haie suivant la revendication 3, lorsqu'elle est dépendante de la revendication 2, ou suivant la revendication 4, dans lequel l'extension oblongue est un élément gaine oblong qui coopère avec la barre de support de lame et s'étend le long de la longueur de l'élément d'entraînement.

6. Taille-haie suivant la revendication 5, lorsqu'elle dépend de la revendication 4, dans lequel la gaine et la barre de support de lame sont conçues pour coopérer l'une avec l'autre d'une manière qui restreint le mouvement relatif entre elle à la direction longitudinale.

7. Taille-haie suivant la revendication 6, dans lequel la gaine et la barre de support de lame s'interbloquent de manière à se bloquer ensemble dans la direction latérale.

8. Taille-haie suivant l'une quelconque des revendications 2 à 7, dans lequel il est prévu au moins une broche pouvant être rétractée et une pluralité de trous ou d'évidements de coopération, la au moins une broche et la pluralité de trous ou d'évidements étant conçus pour connecter directement ou indirectement l'élément ou les éléments à lame entraînés avec un élément d'entraînement.

9. Taille-haie suivant l'une quelconque des revendications 5 à 8, dans lequel il est prévu des moyens conçus pour bloquer de manière libérable ensemble la gaine et la tête de taille.

10. Taille-haie suivant la revendication 9, dans lequel les moyens conçus pour bloquer d'une manière libérable ensemble la gaine et la tête de taille comportent un premier élément fixé à la barre de support de lame ou à la gaine et un deuxième élément conçu pour coopérer de manière libérable avec le premier élément.

11. Taille-haie suivant l'une quelconque des revendications précédentes, dans lequel les deux éléments à lame sont conçus pour être entraînés pour effectuer un mouvement de va-et-vient longitudinalement et les deux éléments à lame sont munis de moyens d'entraînement agencés pour leur faire subir un mouvement de va-et-vient.

12. Taille-haie suivant la revendication 11, dans lequel les premier et deuxième éléments à lame sont agencés pour effectuer un mouvement de va-et-vient avec des déplacements sensiblement en opposition.

13. Taille-haie suivant la revendication 11 ou 12, dans lequel l'un des éléments à lame est conçu pour entraîner l'action de mouvement de va-et-vient de l'autre élément à lame.

14. Taille-haie suivant l'une quelconque des revendications 11 à 13, dans lequel les premier et deuxième éléments à lame sont connectés par une articulation parallèle.

15. Taille-haie suivant l'une quelconque des revendications précédentes, dans lequel chaque élément d'entraînement a une longueur fixe et peut coopérer de manière libérable avec au moins un élément à lame entraîné.

16. Taille-haie suivant l'une quelconque des revendications 1 à 14, dans lequel chaque élément d'entraînement est conçu pour avoir une longueur variable.

17. Taille-haie suivant l'une quelconque des revendications 11 à 12, comportant deux éléments d'entraînement, chacun conçu pour donner à l'un des éléments à lame un mouvement de va-et-vient.
